# EUROPEAN PATENT SPECIFICATION

(11) **EP 4 248 728 B1**
(45) Date of publication and mention of the grant of the patent: **01.01.2025**
(21) Application number: 23163086.4
(22) Date of filing: 21.03.2023
(51) Int. Cl.: A01D 34/43, A01D 34/86, A01D 75/30

(54) **CUTTING ASSEMBLY WITH DOUBLE FLAIL MOWER**
SCHNEIDANORDNUNG MIT DOPPELFLEGELMÄHER
ENSEMBLE DE COUPE AVEC FAUCHEUSE À DOUBLE FLÉAUX

(30) Priority: 22.03.2022 IT 202200005609
(43) Date of publication of application: 27.09.2023
(73) Proprietor: Gnocco, Simone, 35023 Bagnoli di Sopra (PD) (IT)
(72) Inventor: Gnocco, Simone, 35023 Bagnoli di Sopra (PD) (IT)
(74) Representative: De Bortoli, Tiziano

(56) References cited:
- EP-A2- 1 262 097
- DE-C1- 4 322 018
- GB-A- 2 149 635
- IT-A1- 202000 004 099
- US-B1- 6 351 929

## Description

### TECHNICAL FIELD

The present invention falls within the scope of the production of devices for agricultural or forestry use. The present invention relates to a cutting assembly comprising at least two flail mowers for cutting brush, grass, hedges, bushes and the like.

### BACKGROUND ART

In the field of agriculture and forestry, devices capable of professionally cutting grass, brush, hedges, bushes and the like have been known for some time. In particular, these cutting assemblies or cutting heads comprise at least one flail mower provided with means for cutting the plant material on which it acts. These cutting means are housed and supported in a box body and can be differently configured. Flail mowers with rotor cutting means, i.e., comprising a rotor that supports a series of knives, are, for example, widely used. These knives define a cutting plane substantially parallel to the rotation axis of the rotor. In other cases, the cutting means consist of blades rotating about a rotation axis orthogonal to the cutting plane configured by said blades.

A cutting assembly is mounted on a self-propelled vehicle (for example an agricultural tractor) typically by means of an articulated structure that allows it to assume a range of predefined positions with respect to the vehicle, both in terms of mutual distance and in terms of mutual angular positioning.

Typically, a cutting assembly is used to cut plants present on farmlands, ditches, roadsides and hedgerows; another very frequent use is that of cutting road and motorway hedgerows, which can also have considerable lengths. In order to allow such versatility, a cutting assembly must be configured so as to allow the cutting means of the flail mower to act on surfaces with different inclinations, always with the same efficacy.

In recent years, cutting assemblies comprising two flail mowers have been proposed, each of which includes cutting means that can be activated simultaneously or not simultaneously to the cutting means of the other flail mower. Obviously, the use of two flail mowers increases productivity, i.e., reduces the machine running times. In fact, with respect to the configuration with only one flail mower, the use of two flail mowers makes it possible to act on a larger surface area or, alternatively, to act simultaneously on two distinct different surfaces during the same forward movement of the self-propelled vehicle.

A first example of a cutting assembly with two flail mowers is described in the patent US 5,341,629. In particular, the cutting assembly is provided with an articulated arm that allows the movement of the two flail mowers with respect to the self-propelled vehicle. The two flail mowers are operatively connected by an articulated structure that allows a mutually orientation thereof. In particular, this articulated structure has an operating configuration that is not particularly versatile as it allows the cutting assembly to perform the cut only on a substantially flat surface or alternatively only on two surfaces inclined substantially in a V-shape. The configuration of the articulated structure, for example, does not allow the cutting assembly to simultaneously cut a vertical side and a horizontal side of a hedge or to simultaneously cut a first flat surface and a second surface inclined with respect to the flat surface.

It is also observed that the solution described in US 5,341,629 can only be used in the case in which the cutting means consist of a rotating blade with an axis of limited height, of the type typically used only for cutting grass. In this case, the cutting blade rotates about an axis substantially orthogonal to the cutting plane configured by said blade. Therefore, the box body that contains the blade has a limited footprint thus compatible with the V-shaped opening/closing movement permitted by the articulated structure of US 5,341,629.

On the other hand, flail mowers with rotor cutting means are incompatible and hence not suitable to be installed on the articulated structure of US 5,341,629. In fact, in this type of flail mower the box body has a considerably large footprint, as the cutting knives have a larger diameter larger the rotor that supports them, rotor which rotates according to an axis parallel to the plane on which said knives act. During the V-shaped opening/closing movements of the two box bodies there is the risk of the two box bodies colliding or moving to far away from each other, unless other means are arranged between the two box bodies to prevent this problem.

In addition to this limited versatility, in the solution of US 5,341,629 the conformation of the articulated structure arranged between the two flail mowers does not allow continuity to be established in the cutting edge, even when the two flail mowers are coplanar, i.e., when they act on a same flat surface. In practice, during the forward movement of the self-propelled vehicle, the cut on the flat surface is not continuous if considered along a direction orthogonal to the direction of forward movement. As a result of the conformation of the articulated structure, the cutting means do not cut in the region comprised between the two flail mowers. This condition makes it necessary to take action on the flat surface more than once in order to cut every portion thereof. Naturally, this translates into an increase in operating times. Another example of a cutting assembly with two flail mowers is described in the patent application IT102021000004517. In this case, the two flail mowers are mounted on a support connected to the self-propelled vehicle by means of a first quadrilateral articulated structure that allows it to move on a substantially horizontal plane. The first flail mower is rotatable with respect to this support about a first rotation axis. A second articulated structure is interposed between the first flail mower and the second flail mower to allow the second flail mower to rotate with respect to the first flail mower about a second rotation axis that, in a first possible embodiment, is parallel to the first rotation axis. In a second embodiment, described in the same document, the two rotation axes (first and second) are orthogonal to each other. Suitable actuator means allow the two flail mowers to rotate about the corresponding rotation axes defined above.

With respect to the solution shown in US 5,341,629, the cutting assembly described in IT102021000004517 allows greater functional versatility as the conformation of the two articulated structures allow the two flail mowers to reach a wider range of possible operating positions, i.e., a greater number of possible uses.

Nonetheless, the solution of IT102021000004517 also has various problems, including the particularly complex configuration of the second articulated structure that has an impact on the footprint. In addition to this, the problem of lack of continuity of the cutting edge determined by the configuration of the second articulated structure that connects the two flail mowers, is also encountered in this case. More precisely, this lack of continuity occurs above all when the cutting edges of the two flail mowers lie on inclined planes, i.e., when the two flail mowers act on mutually inclined surfaces. EP 1 262 097 A2 discloses a cutting assembly according to the preamble of claim 1.

In view of the considerations set forth above, there is the need to provide a new technical solution that allows the technical problems identified and described above to be solved.

### SUMMARY

The main aim of the present invention is to provide a cutting assembly that allows the aforementioned problems to be overcome or in any case limited. Within this aim, a first object of the present invention is to provide a cutting assembly comprising at least two flail mowers and having a configuration that allows high operational functionality, i.e., a wide range of possible uses. Another aim of the present invention is to provide a cutting assembly that allows the two flail mowers to establish a continuous cutting edge even in some configurations in which the two cutting edges are not coplanar.

A further aim of the present invention is to provide a cutting assembly in which the at least one flail mower can be oriented in space while the other maintains a fixed position. One more object of the present invention is to provide a cutting assembly that is reliable and easy to produce at competitive costs.

Accordingly, the present invention relates to a cutting assembly installable on a self-propelled vehicle and comprising a first flail mower and a second flail mower, wherein each flail mower comprises a box body and plant material cutting means supported within the box body. The cutting assembly according to the invention is characterized by comprising:
- a base support connectable, directly or indirectly, to the self-propelled vehicle;
- a first support frame hinged to the base support so as to rotate about a first rotation axis, wherein the first frame supports the first flail mower in a slidable way to allow said first flail mower to translate along a first displacement direction orthogonal to the first rotation axis;
- first moving means for rotating the first frame about the first rotation axis;
- a second support frame connected to the second flail mower and hinged to the first frame so as to rotate about a second rotation axis;
- second moving means for rotating the second frame, with respect to the first frame, about the second rotation axis;
- a connecting element that operatively connects the second frame to the box body of the first flail mower so that a rotation of the second frame about the second rotation axis determines a corresponding translation of the first flail mower, with respect to the first frame, along the first displacement direction.

The cutting assembly according to the invention is particularly versatile from an operating point of view as it allows numerous possibilities of adjustment, above all in terms of mutual orientation between the two flail mowers. The configuration of the cutting assembly further allows an optimal cutting edge to be achieved even in the case in which the two flail mowers are not coplanar. In particular, the cutting assembly allows the length of the cutting edge to be maximized whatever the mutual orientation of the two flail mowers.

In accordance with a possible embodiment, the second frame is hinged to the first frame so that the second flail mower occupies an offset position with respect to the first flail mower, where this position is considered along a direction parallel to the first rotation axis.

In accordance with a possible embodiment, the second rotation axis is substantially parallel to the first rotation axis.

In accordance with a possible embodiment, the first frame is connected to the box body of the first flail mower in a slidable way by means of first coupling means that configure rectilinear guides defining the first displacement direction.

In accordance with a possible embodiment, the connecting element has a variable extension to allow adjustment of the position of the box body of the first flail mower with respect to the second frame.

In a possible embodiment, the second frame is rigidly connected to the box body of the second flail mower.

In accordance with an alternative embodiment, the second frame supports the second flail mower in a slidable way to allow said first flail mower to translate along a second displacement direction orthogonal to the second rotation axis. Preferably, the second frame is connected in a slidable way to the box body of the second flail mower by means of second coupling means that configure rectilinear guides defining the second displacement direction. In accordance with a possible embodiment, the first moving means comprise an articulated mechanism that includes a first lever hinged to the base support and a second lever hinged to the first lever and hinged to the second support frame; these first moving means further comprise an actuator connected to the first frame and at least one of the levers of the articulated mechanism.

In accordance with a possible embodiment, the second moving means comprise an articulated mechanism including:
- a first lever hinged to the first support frame;
- a second lever hinged to the first lever and hinged to the second support frame connected to the second flail mower;
- an actuator connected to the first frame and to one of the levers of the articulated mechanism.

In accordance with an embodiment, the cutting assembly comprises a further connecting element that establishes the position, considered along said second displacement direction, of the second flail mower with respect to the second support frame.

In a possible embodiment thereof, said further connecting element is hinged to the box body of the second flail mower and to a pin defining the second rotation axis.

In a variant of embodiment, said further connecting element has a variable extension to allow adjustment of the distance between the box body of the second flail mower and the second rotation axis.

### LIST OF FIGURES

Further features and advantages of the invention will be more apparent by examining the following detailed description of some preferred, but non exclusive, embodiments of a cutting assembly, illustrated by way of non-limiting example, with the aid of the accompanying drawings, wherein:
- Figs. 1 and 2 are perspective views from different observation points of a first embodiment of a cutting assembly according to the invention;
- Figs. 3, 4 and 5 are respectively a rear view, a plan view and a side view of the cutting assembly of Figs. 1 and 2;
- Figs. 6 and 7 are respectively a rear view and a perspective view of the cutting assembly of Figs. 1 and 2 in a possible operating configuration;
- Fig. 8 is an exploded view of the cutting assembly of Figs. 1 and 2;
- Figs. 9 and 10 are perspective views from different observation points of a second embodiment of a cutting assembly according to the invention;
- Fig. 11 is an exploded view of the cutting assembly of Figs. 9 and 10;
- Figs. 12 and 12A are plan views of the cutting assembly of Figs. 9 and 10 in two possible operating configurations, wherein each figure shows the cutting assembly in a possible position with respect to a self-propelled vehicle;
- Figs. 13 to 20 are views of the cutting assembly of Figs. 9 and 10, each relating to a possible operating configuration which can be assumed thereby.

The same reference numbers and letters in the figures identify the same elements or components.

### DETAILED DESCRIPTION

With reference to the aforesaid figures, the present invention relates to a cutting assembly 1 installable on a self-propelled vehicle (not visible in the figures) such as a tractor, a truck or another functionally equivalent vehicle.

The cutting assembly 1 according to the invention comprises a first flail mower 10 and a second flail mower 20 both for cutting plant material, this expression being intended generically as grass, brush, hedges, bushes and the like. Both the flail mowers 10, 20 comprise at least one box body 10A, 20A that supports plant material cutting means. The term *"box body"* generically indicates the structure of the flail mower that, in accordance with known principles, defines a volume in which the cutting means are arranged and supported. This structure is preferably open to allow the cutting means to perform their function on the plant material. The box body 10A, 20A extends mainly along a longitudinal direction Y₁, Y₂. The two flail mowers 10, 20 can have the same or a different length, where this length is considered along said longitudinal direction 201.

The configuration of the cutting means of the two flail mowers 10, 20 is not important in relation to the present invention. In a possible embodiment thereof, for example, the cutting means can be of *"rotor"* type, i.e., comprising a rotor that supports knives about it. These knives perform a cut on a plane that is substantially parallel to the axis of the rotor. In another possible and hence not exclusive embodiment, the cutting means could be defined by rotating blades that configure a cutting plane and with a rotation axis orthogonal to this plane.

For the objects of the invention, the extension, considered along the longitudinal direction Y₁, Y₂, of the cutting means is instead defined as *"cutting edge"* L₁, L₂, where this extension coincides with the length, considered along the same longitudinal direction Y₁, Y₂, of the cut performed on the plant material.

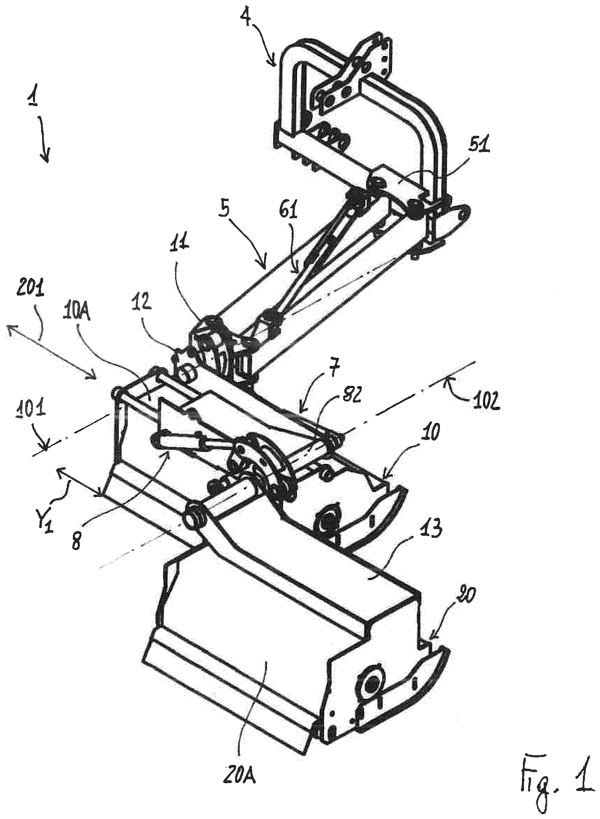

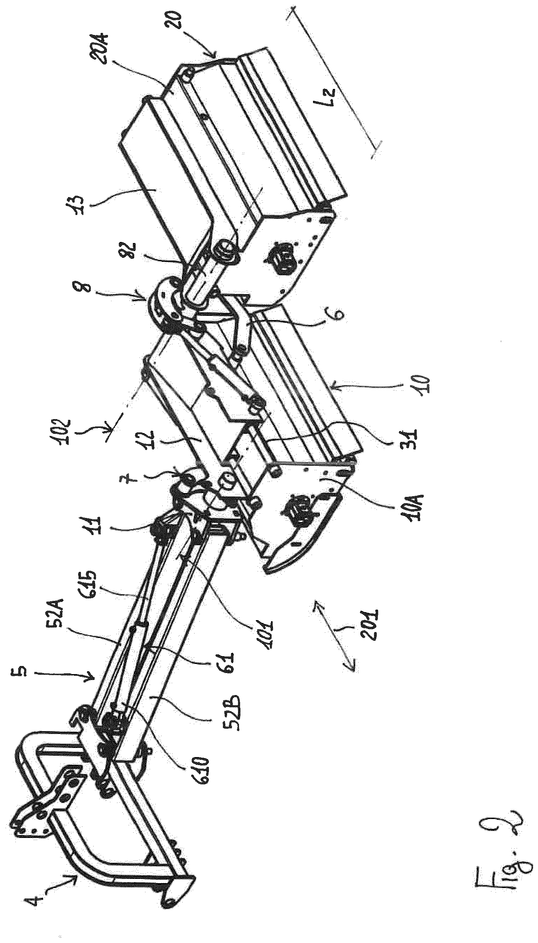

Figs. 1 to 8 relate to a first embodiment of a cutting assembly 1 according to the invention. This assembly comprises a base support 11 that supports the flail mowers 10, 20 and that is connected, directly or indirectly, to a support structure 4 (hereinafter also indicated with the colloquial term *"third point hitch"* 4) integral with the self-propelled vehicle. The term *"directly"* indicates a condition such that a part of the base support 11 is fixed directly to the support structure 4.

As can be seen in the figures, the base support 11 is however preferably connected to the support structure 4 by means of a connecting structure 5 which allows the base support 11 to occupy various positions with respect to the third point hitch 4. These positions vary in terms of mutual distance and angular positioning.

In accordance with a preferred embodiment shown in the figures, the connecting structure 5 is articulated and of the *"parallelogram"* type. It comprises a supporting bracket 51 connected to the support structure 4 and a pair of bars 52A, 52B hinged at a first end thereof to the supporting bracket 51 and at a second end thereof to the base support 11. The two bars 52A, 52B are connected so as to be parallel and hence define the parallelogram shape.

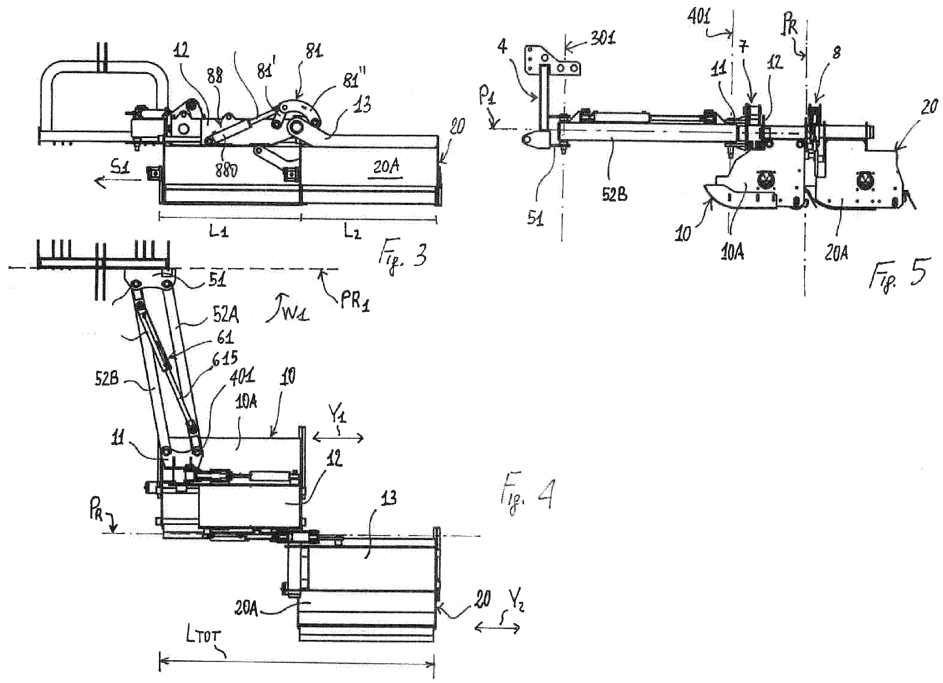

As a whole, this articulated connecting structure 5 allows the base support 11 (and consequently the other components of the cutting assembly 1) to move on a movement plane P1 substantially orthogonal to the hinge axes 301 of the bars 52A, 52B with the supporting bracket 51 and to the rotation axes 401 of the same bars 52A, 52B with respect to the base support 11 (see Fig. 5).

For this purpose, an actuator 61 is provided, which determines the rotation of the two bars 52A, 52B with respect to the supporting bracket 51. As can be seen, for example, from Fig. 4, the actuator 61 preferably comprises a cylinder 610 (hydraulic, pneumatic or electric) inside which a piston 615 slides. The actuator 61 is operatively connected between the supporting bracket 51 and one of the two bars 52A, 52B. In the specific case illustrated, the cylinder 610 is connected to the supporting bracket 51, while the end of the piston 615 is connected to the bar 52A in a position close to the base support 11. For this installation condition, with respect to the configuration shown in the plan view of Fig. 4, the retraction of the piston 615 in the cylinder 610 determines a counter-clockwise rotation (arrow W1) of the two bars 52A, 52B and consequently a movement of the base support 11 toward a reference plane PR₁ on which the support structure 4 extends. As a result of the parallelogram configuration of the articulated structure 5, the base support 11 rotates and translates with respect to the supporting bracket 51, maintaining the same orientation with respect thereto.

In an alternative embodiment, not shown in the figures, the connecting structure 5 could consist of an articulated arm, for example conceptually similar to the one shown in the document US 5,341,629 cited above. In general, the connecting structure 5 could have configurations functionally equivalent to those described above.

According to the present invention, the cutting assembly 1 comprises a first support frame 12 hinged to the base support 11 so as to rotate about a first rotation axis 101. The first support frame 12 supports the first flail mower 10 in a slidable way, i.e., so as to allow it to translate along a displacement direction orthogonal to the first rotation axis 101 (see, for example, Fig. 1). In the figures and in the description below, this displacement direction is indicated with the reference 201 and is parallel to the longitudinal direction Y₁ along which the box body 10A of the first flail mower 10 mainly extends.

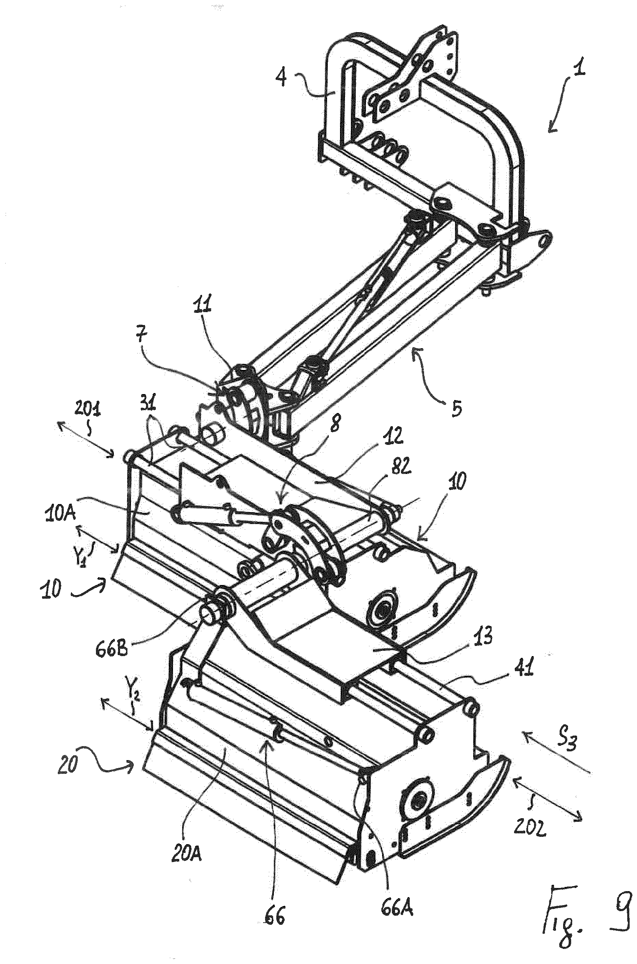

In the embodiment shown in the figures, the box body 10A of the first flail mower 10 is connected in a slidable way to the first frame 12 by means of first coupling means that configure a pair of rectilinear guides 31 (indicated in Fig. 9) between the two coupled components (first frame 12 and box body 10A). These rectilinear guides 31 define the displacement direction 201 along which the first flail mower 10 moves with respect to the first frame 12. Alternatively, either a single guide or a number of guides greater than two could be provided. In general, the first coupling means can be different from those described and shown in the figures, as long as they are functionally equivalent, i.e., so as to allow the first flail mower 10 to rotate about the first rotation axis 101 together with the first frame 12, maintaining a degree of freedom in translation along the displacement direction 201.

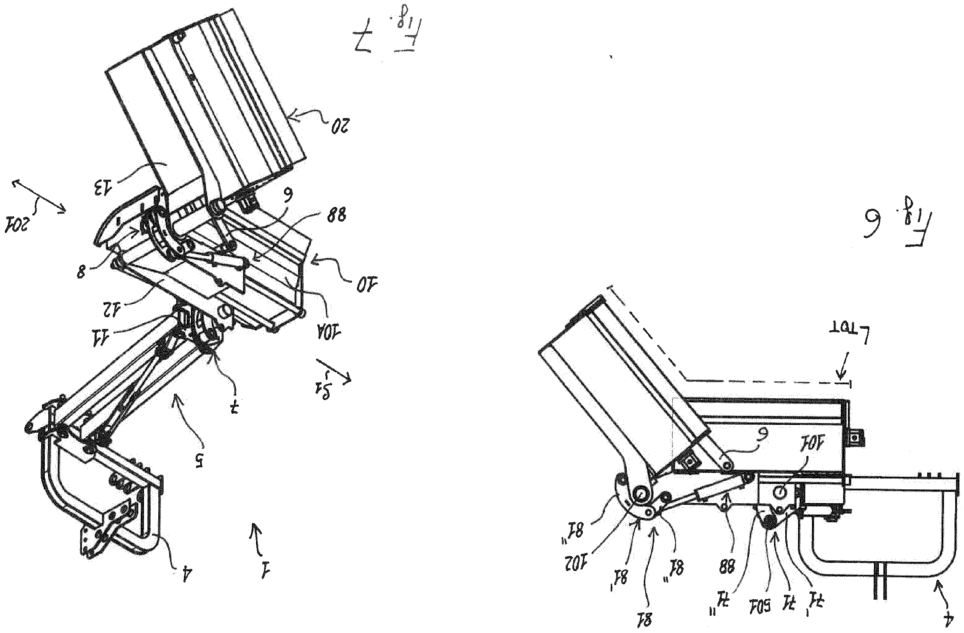

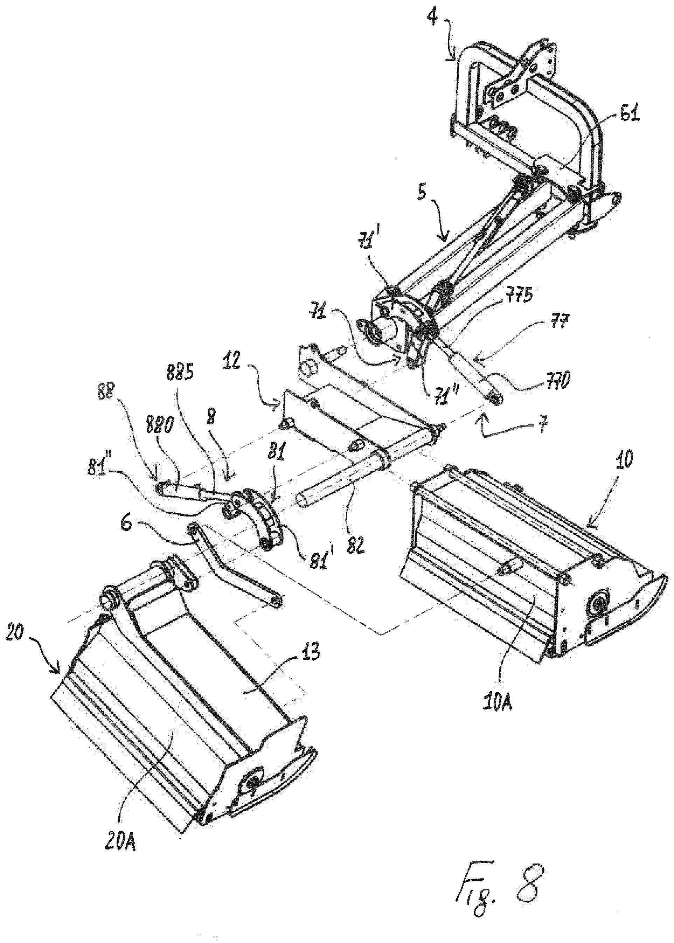

The cutting assembly 1 according to the invention comprises first moving means 7 for rotating the first frame 12 with respect to the base support 11 about the first rotation axis 101. In the embodiment shown in the figures, the first moving means 7 comprise an articulated mechanism 71 that includes a first lever 71' hinged to the base support 11 and a second lever 71" hinged, at opposite ends, to said first lever 71' and to said first frame 12. The first moving means 7 further comprise an actuator 77 connected to the first frame 12 and to at least one or the two levers 71', 71". Preferably, the actuator 77 is connected to the levers 71, 71" at their hinge axis 501 (indicated in Figs. 6 and 8).

In the specific case illustrated, the actuator 77 comprises a cylinder 770 connected to the first frame 12 and a piston 775, slidable with respect to the cylinder 770, the end of which is connected to said hinge point. The movement of the piston 775 with respect to the cylinder 770 translates into the rotation of the first frame 12 with respect to the base support 11. The first flail mower 10 follows the first frame 12 in rotation, being supported thereby by means of the first coupling means (31) indicated above.

The first moving means could be configured differently with respect to the above description. In an alternative embodiment (not shown in the figures), for example, they could comprise a motorized hinge comprising a first hinge body connected to the base support 11 and a second hinge body, coaxial to the first body and integral with the first frame 12. A motor means allows the rotation of the second hinge body with respect to the first hinge body about the first rotation axis 101 configured by the coupling of the two hinge bodies.

According to the invention, the second flail mower 20 is associated with a second support frame 13 connected in a rotatable way (i.e., hinged) to the first frame 12 supporting the first flail mower 10. In particular, the second frame 13 rotates, supporting the second flail mower 20, about a second rotation axis 102 preferably, but not exclusively. parallel to the first rotation axis 101.

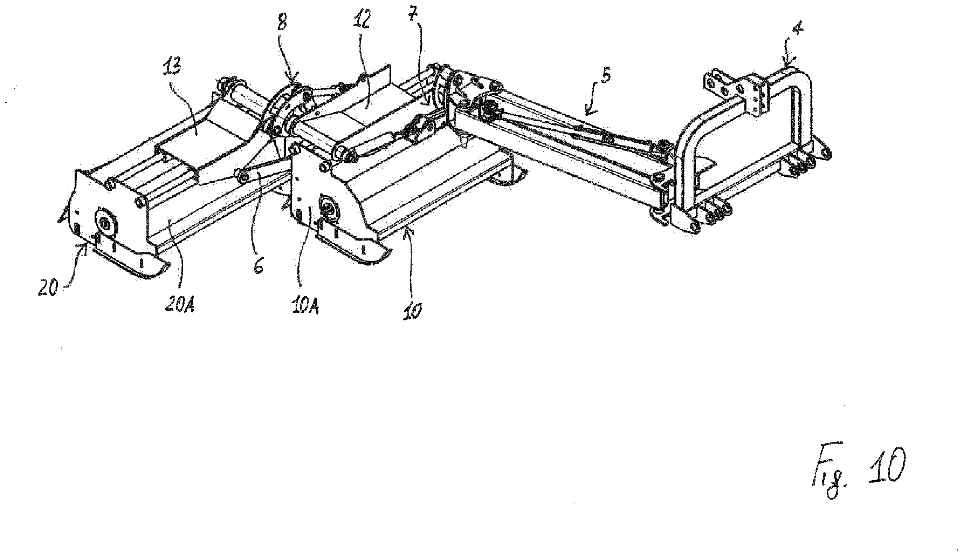

In the embodiment shown in Figs. 1 to 8, the second frame 13 is integral with the box body 20A of the second flail mower 20. In substance, the two parts in question (second frame 13 and box body 20A) move together rigidly. As better described below, in the embodiment shown in Figs. 9 to 20, the two parts (second frame 13 and box body 20A of the second flail mower 20) are connected in a slidable way.

In general, the rotatable connection between the first frame 12 and the second frame 13 is defined so that the second flail mower 20 occupies an offset position with respect to the first flail mower 10 where this position is considered along a direction parallel with respect to the rotation axes 101, 102 defined above. The term *"offset"* is meant to indicate a condition according to which the two flail mowers 10, 20 are arranged on opposite sides with respect to a reference plane P_{R} orthogonal to the first rotation axis 101. This plane is indicated in Figs. 4 and 5.

Preferably, the second rotation axis 102 is configured by a pin 82 integral with the first frame 12. In the specific case illustrated, the pin 82 is placed at the end of the first frame 12 farthest from the first rotation axis 101. The first frame 12 thus establishes a fixed and invariable distance between the second rotation axis 102 and the first rotation axis 101.

The cutting assembly 1 comprises second moving means 8 for determining and controlling the rotation of the second frame 13, and consequently of the second flail mower 20, about the second rotation axis 102. In the solution shown in the figures, the second moving means 8 comprise an articulated mechanism 81 that includes a first lever 81' hinged to the first frame 12. This articulated mechanism 81 further comprises a second lever 81" with an end hinged to the first lever 81' and with the opposite end hinged directly to the second frame 13 associated with the second flail mower 20. Said second moving means 8 further comprise an actuator 88 connected to the first frame 12 and to the two levers 81', 81" at the hinge points thereof.

In the specific case illustrated, the actuator 88 comprises a cylinder 880 hinged to the first frame 12 and a piston 885, inserted in a slidable way in the cylinder 880, which is hinged to the second frame 13. The relative motion of the piston 885 with respect to the cylinder 880 determines the rotation of the second frame 13, and consequently of the second flail mower 20, with respect to the first frame 12 and about the second rotation axis 102.

In accordance with the invention, the cutting assembly 1 further comprises a connecting element 6 that operatively connects the second frame 13 to the box body 10A of the first flail mower 10, so that a rotation of the second frame 13, about the second rotation axis 102, determines a corresponding translation of the first flail mower 10 with respect to the first frame 12. In practice, the connecting element 6 establishes the position of the first flail mower 10, with respect to the second rotation axis 102, as a function of the angle of rotation of the second frame 13 about said second rotation axis 102. Therefore, the connecting element 6 establishes the position taken by the first flail mower 10 with respect to the first frame 12.

With reference, for example, to the operating configuration shown in Fig. 6, with this solution it is possible to obtain a continuity in the total cutting edge L_{TOT} of the cutting assembly 1 even when the cutting edges L₁, L₂ of the two flail mowers lie on different planes. The cutting edge L_{TOT} and its continuity are considered with respect to a rear observation point such as the one from which Fig. 6 derives.

In order to perform its function, the connecting element 6, at a first end thereof, is hinged to the second frame 13 and, at a second end thereof, is hinged to the box body 10A of the first flail mower 10. In the embodiment shown in the figures, the connecting element 6 consists of a shaped rigid bar, the length of which, considered with respect to the hinge points, is substantially invariable.

In an alternative embodiment, the connecting element 6 could consist of an actuator, again of the type comprising a cylinder and a piston inserted in a slidable way therein. The cylinder and the piston could be connected respectively to the frame 13 and to the box body 10A of the first flail mower 10. In this case, the connecting element 6 would in practice have a variable/adjustable length. This solution introduces the possibility of adjusting the position of the first flail mower 10 with respect to the second rotation axis 102, i.e., the possibility of adjusting the position of the first cutting edge L₁ with respect to the second cutting edge L₂. In fact, it becomes possible to vary, according to operational requirements, the length of the total cutting edge L_{TOT}.

In Figs. 3 to 5 a possible configuration of use of the cutting assembly 1 can be observed. The two flail mowers 10, 20 occupy a substantially horizontal position so that the two cutting edges L₁, L₂ are substantially coplanar, being positioned substantially at the same height from the ground. As can be seen from Figs. 4 and 5, as a result of the offset position of the two flail mowers 10, 20, the cutting edge L₁ of the first flail mower 10 is moved farther toward the self-propelled vehicle with respect to cutting edge L₂ of the second flail mower 20. The total cutting edge L_{TOT}, considered along the displacement direction 201, has a length substantially corresponding to the sum of the two cutting edges L₁, L₂.

Activation of the second moving means 8 can determine a clockwise rotation of the second frame 13 and hence of the second flail mower 20 associated therewith reaching, for example, the configuration of use of Fig. 6. As it is hinged to the second frame 13, the connecting element 6 is affected by this rotation and pushes, along the displacement direction 201, the first flail mower 10 away (arrow S1 in Fig. 3) from the second rotation axis 102. This movement away from the axis can be observed by comparing Figs. 3 and 6 in which, the configuration of the articulated structure 5 being equal, a different position of the first flail mower 10 with respect to the third point hitch 4 is observed.

The relative displacement of the first flail mower 10 with respect to the first frame 12 makes it possible to limit the reduction of the length of the total cutting edge L_{TOT} that is generated following the relative rotation between the two flail mowers 10, 20, i.e., following the absence of coplanarity of the cutting edges L₁, L₂ of the two flail mowers 10, 20.

It is evident that in the case of a counter-clockwise rotation of the second frame 13, the connecting element 6 would determine a displacement of the first flail mower 10 along the displacement direction 201 in an opposite direction to the previous one, i.e., in a direction contrary to the arrow S1 and hence moving toward the second rotation axis 102.

Figs. 9 to 20 refer to a second embodiment of the invention, which differs from the one described above due to the fact that the second flail mower 20 is supported in a slidable way by the second frame 13, according to a principle substantially identical to the principle of the first flail mower 10 supported by the first frame 12. More precisely, the box body 20A of the second flail mower 20 is connected in a slidable way to the second frame 13 by means of second coupling means that allow said box body 20A to move with respect to the frame 13 along a displacement direction 202 substantially orthogonal to the second rotation axis 102.

In the embodiment illustrated, the second coupling means configure a plurality of rectilinear guides 41 between the second frame 13 and the box body 20A of the second flail mower 20, where these guides define the displacement direction 202 for the second flail mower 20. In substance, the second coupling means are structurally and functionally identical to the first coupling means provided between the first frame 12 and the box body 10A of the first flail mower 10. The displacement direction 202 is parallel to the direction Y₂ along which the box body 20A of the second flail mower 20 mainly extends. The scope of the present invention also includes the possibility of the second coupling means having a different configuration from the one described and shown in the figures, provided that it is functionally equivalent. Again with reference to Figs. 9 to 20, the cutting assembly 1 comprises a further connecting element 66 to establish the position of the second flail mower 20 with respect to the second frame 13, i.e., with respect to the second rotation axis 102.

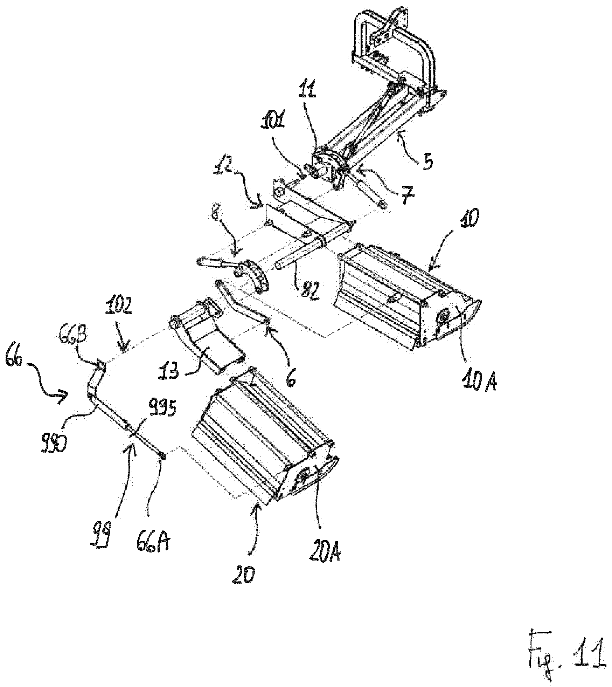

In the specific case illustrated in the figures, said further connecting element 66, at a first end 66A thereof, is hinged to the box body 20A of the second flail mower 20. At a second end 66B thereof, the connecting element 66 is instead hinged to the pin 82 defining the second rotation axis 102 (see Fig. 11). The connecting element 66 is thus integral with the first frame 12 when it rotates about the first rotation axis 101 and establishes the position of the second flail mower 20 with respect to the second rotation axis 102.

In accordance with a preferred embodiment shown in the figures, the connecting element 66 has a variable extension, i.e., a configuration such as to allow adjustment of the distance of the second flail mower 20 from the second rotation axis 102.

In the solution shown in the figures, the connecting element 66 comprises an actuator 99 that includes a cylinder 990 and a piston 995 inserted in a slidable way in the cylinder 990 and hinged at the free end thereof to the box body 20A of the second flail mower 20. The extension of the piston 995 with respect to the cylinder 990 establishes the position of the second flail mower 20 with respect to the second frame 13 and hence the position of the second cutting edge L₂ with respect to the first cutting edge L₁ of the first flail mower 10.

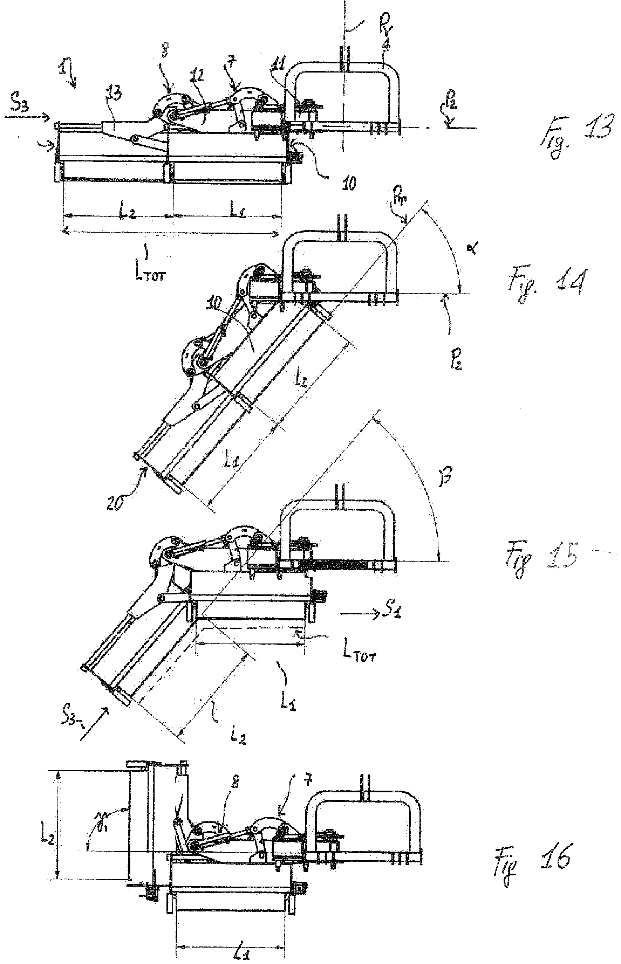

The possibility of adjusting the position of the second flail mower 20 with respect to the second frame 13 allows the length of the total cutting edge L_{TOT} to be varied according to actual requirements. Considering, for example, the configuration shown in Fig. 13 and 14, a total cutting edge L_{TOT} is identified, determined by the coplanar condition of the two flail mowers 10, 20. Adjustment of the position of the second flail mower 20 with respect to the second frame 13 allows the length of the cutting edge L_{TOT} to be varied with respect to the translation plane Pv of the self-propelled vehicle (plane indicated only in Fig. 13). With reference now to Fig. 9, it can be understood how retraction of the piston 995 into the cylinder 990 determines a displacement (indicated with S3 in Figs. 13 and 9) of the second flail mower 20 toward the first flail mower 10 and hence a reduction of the value of the total cutting edge L_{TOT}.

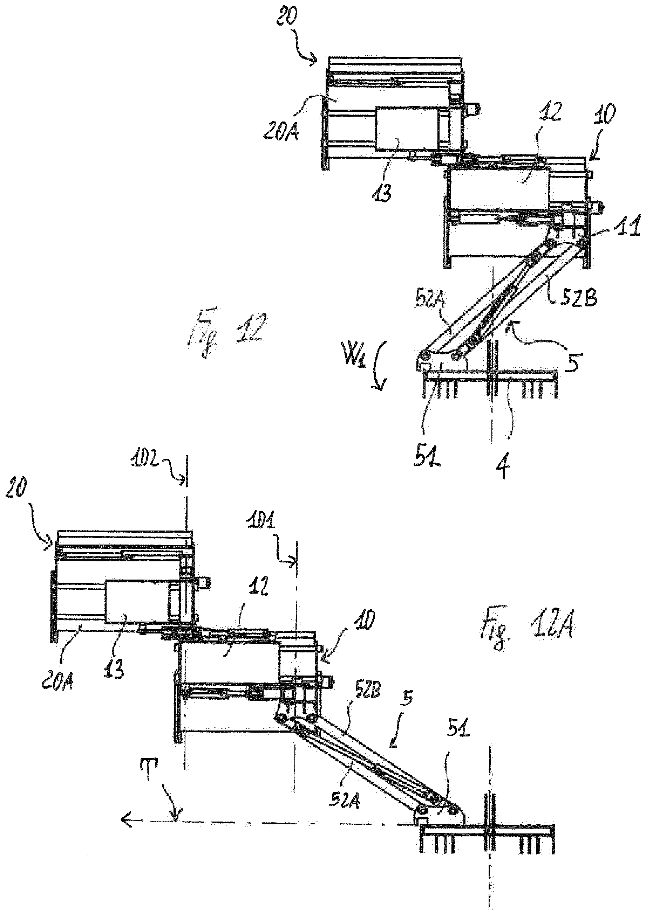

Figs. 12 to 20 show possible configurations of use of the cutting assembly 1 of Figs. 9 to 11 and allow the considerable operational versatility to be appreciated. Figs. 12 and 12A show a plan view of the cutting assembly 1 in an operating configuration for which the two cutting edges L₁, L₂ of the two flail mowers 10, 20 are substantially coplanar (same condition also shown in Figs. 3, 4 and 5). In particular, these two Figs 12 and 12A make it possible to understand the function of the articulated structure 5 that allows the position of the two flail mowers 10, 20 to be varied with respect to the third point hitch 4, i.e., with respect to the self-propelled vehicle. Starting from the configuration of use in Fig. 12, by means of activation of the actuator 61 it is possible to determine a counter-clockwise rotation (arrow W1) of the two bars 52A, 52B of the articulated structure 5, until reaching the configuration of Fig. 12A in which the two flail mowers 10, 20 occupy the lateral position farthest from the third point hitch 4. The lateral position is considered as distance from the supporting bracket 51 along a direction of reference T orthogonal to the rotation axes 101, 102 defined above.

Fig. 13 shows the same operating configuration as Fig. 3, but from a substantially opposite observation point. In this configuration, the two cutting edges L₁, L₂ are coplanar and define a total cutting edge L_{TOT} given by their sum. In particular, the two cutting edges L₁, L₂ lie on the same plane parallel to a horizontal reference plane P₂ defined by the support structure 4.

Fig. 14 shows an operating configuration in which the two cutting edges L₁, L₂ are still coplanar, but lie on a cutting plane P_{T} inclined with respect to the reference plane P₂ defined above. Starting from the configuration of Fig. 13, the configuration of Fig. 14 can be reached by activating the first moving means 7, i.e., determining a rotation of only the first frame 12 with respect to the base support 11 about the first rotation axis 101. This rotation will be of an amplitude equal to that of the angle α between the cutting plane P_{T} and the reference plane P₂.

The operating configuration of Fig. 14 can be provided, for example, for cutting plant material along the escarpment of a road, while the self-propelled vehicle moves along said road. Advantageously, the cut can be made with the maximum length of the total cutting edge L_{TOT} or with a smaller cutting edge suitably chosen according to requirements.

The operating configuration shown in Fig. 15 is instead useful for cutting plant material placed on two different planes, such as those configured by the wall of a ditch and by the ground on which the self-propelled vehicle moves. The configuration of Fig. 15 can be obtained, starting from the configuration of Fig. 13, by activating the second moving means 8 and then causing counter-clockwise rotation (with respect to the observation point of Fig. 15) of the second frame 13 and of the second flail mower 20 about the second rotation axis 102. The rotation angle β coincides substantially with the angle between the planes on which the plant material to be cut is located. As a result of this rotation, the first flail mower 10 moves in the direction indicated by the arrow S1 (in Fig. 15) so as to maximize the total cutting edge L_{TOT} according to principles already set forth above.

If required, the total cutting edge L_{TOT} (dashed line in Fig. 15) can be reduced by varying the position of the second cutting edge L₂ of the second flail mower 20. In fact, by acting on the actuator 99 it is possible to move the second flail mower 20 with respect to the second frame 13 in the direction indicated by the arrow S3 along the displacement direction 201.

The operating configuration of Fig. 16 is reached by means of a clockwise rotation (again with respect to the observation point of Fig. 15) of the second frame 13 and of the second flail mower 20 about the second rotation axis 102 starting from the configuration of Fig. 13. This configuration with an angle γ₁ equal to 90° can be used, for example, for simultaneously cutting the wall of a hedge and for cutting grass on the ground along which the self-propelled vehicle moves. The amplitude of the angle γ₁ is advantageously adjustable by means of the second moving means 8 so as to establish the operating configuration time by time most suitable for the operating condition required.

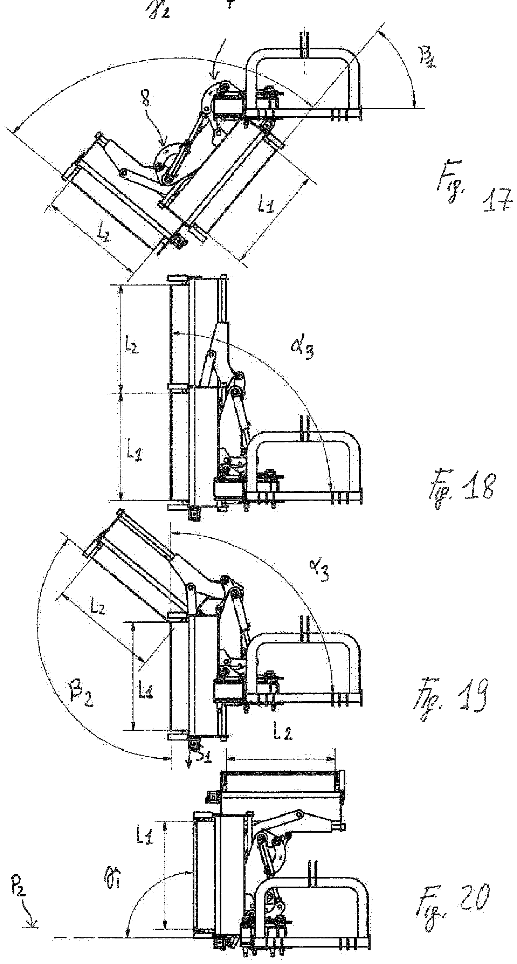

The operating configuration shown in Fig. 17 is particularly useful for cutting plant material on the grassy banks of a ditch, where these grassy banks are substantially V-shaped. Starting from the configuration of Fig. 16, the configuration of Fig. 17 can be reached by taking action only on the first moving means 7 so as to determine a rotation (angle β₁) of the first frame 12 and of the first flail mower 10 about the first rotation axis 101. The two cutting edges L₁, L₂ maintain the same mutual orientation (angle γ₂). It can be easily observed how the operating configuration shown in Fig. 17 can be reached starting from any of the other operating configurations described above activating the first moving means 7 and/or the second moving means 8, as the case may require.

The operating configurations shown in Figs. 18 to 20 are particularly suitable for cutting vertical walls of hedges or similar. The configuration of Fig. 18 can be reached starting from the configuration of Fig. 13 activating the first moving means 7 so as to determine a clockwise rotation (by an angle α₃ substantially equal to 90°).

The operating configuration of Fig. 19 allows, for example, cutting of the plant material of a first side, substantially vertical, of a hedge with the first flail mower 10 and cutting of the plant material on a second side inclined with respect to the first, with the second flail mower 20. The configuration of Fig. 19 can be easily reached by determining, through the second moving means 8, a counter-clockwise rotation of the second frame 13 and of the second flail mower 20 (about the second rotation axis 102) starting from the operating configuration of Fig. 18. This rotation determines the inclination of the cutting edge L₂ of the second flail mower 20 with respect to the cutting edge L₁ of the first flail mower 10 (inclination identified by the angle β₂). In Fig. 19 it can be observed how following this counter-clockwise rotation, as a result of the connecting element 6, the first flail mower 10 assumes a lower position closer to the ground with respect to the position occupied in Fig. 18 with the advantage of offsetting the reduction of the total cutting edge L_{TOT} determined by the inclination of the second flail mower 20 with respect to the first flail mower 10.

In the operating configuration of Fig. 20, the first flail mower 90 is inclined by an angle γ₁ with respect to the reference plane P₂ defined above. The second flail mower 20 is inclined by an angle equal to 90° with respect to the first flail mower 10 so that the two cutting edges L₁, L₂ are orthogonal to each other. This configuration can also be used to cut the plant material on a substantially vertical side of a hedge, where this cut is carried out only by the first flail mower 10. The second flail mower 20 occupies a position substantially retracted toward the ground so as to minimize the footprint of the cutting assembly. Advantageously, due to the limited footprint, the operating configuration of Fig. 20 can be used as configuration for transporting the cutting assembly 1 by road via the self-propelled vehicle, intending to indicate a condition in which the cutting assembly 1 is only transported, but not used.

In a possible embodiment, not shown in the figures, the cutting assembly according to the invention could also comprise a third flail mower arranged in a position substantially opposite the second flail mower 20. In other words, in this embodiment, the first flail mower 10 would be intermediate between the other flail mowers 10, 20 with respect to an observation point behind the self-propelled vehicle. In this case, the first flail mower 10 could be connected to the base support 11 connected to the third point hitch similarly to the solutions already described. The connection between the first flail mower 10 and the third flail mower could be produced in the same way as the connection between the first flail mower 10 and the second flail mower 20 providing a connecting pin between a further support frame associated with the first flail mower and another frame associated with the third flail mower.

In general, in a solution with three or more flail mowers, these could be connected to one another according to the same principle applied to connect the two flail mowers 10, 20 of the solutions described above. A support frame of any one of the three flail mowers can instead be connected in a rotatable way to the support base, again according to the principles set forth above. Moreover, a connecting element (with fixed or variable length) can be arranged between two adjacent flail mowers for the purposes set forth above.

As can be understood from the description, the cutting assembly according to the present invention makes it possible to fully achieve the set aims and objects. In particular, the cutting assembly is distinguished on the one hand for its high functional versatility and on the other for a configuration that as a whole appears of simple construction and easy to produce.

## Claims

1. A cutting assembly (1) installable on a self-propelled vehicle and comprising a first flail mower (10) and a second flail mower (20), wherein each flail mower (10, 20) comprises a box body (10A, 20A) and plant material cutting means supported within said box body (10A, 20A), said cutting assembly (1) comprising:
- a base support (11) connectable, directly or indirectly, to said self-propelled vehicle;
- a first support frame (12) hinged to said base support (11) so as to rotate about a first rotation axis (101);
- first moving means (7) for rotating said first frame (12) about said first rotation axis (101);
- a second frame (13) connected to said second flail mower (20) and hinged to said first frame (12) so as to rotate about a second rotation axis (102);
- second moving means (8) for rotating said second frame (13), with respect to said first frame (12), about said second rotation axis (102);
**characterised in that**
said first support frame (12) supports said first flail mower (10) in a slidable way to allow said first flail mower (10) to translate along a first displacement direction (201) orthogonal to said first rotation axis (101); and **in that** said cutting assembly (1) comprises:
- a connecting element (6) that operatively connects said second frame (13) to said box body (10A) of said first flail mower (10), so that a rotation of said second frame (13) about said second rotation axis (102) determines a corresponding translation of said first flail mower (10), with respect to said first frame (12), along said first displacement direction (201).

2. Cutting assembly (1) according to claim 1, wherein said second frame (13) is hinged to said first frame (12) so that said second flail mower (20) is placed in an offset position with respect to said first flail mower (10), wherein said position is considered along a direction parallel to said first rotation axis (101).

3. Cutting assembly (1) according to claim 1 or 2, wherein said first frame (12) is connected to the box body (10A) of said first flail mower (10) by means of first coupling means that configure rectilinear guides (31) defining said first displacement direction (201).

4. Cutting assembly (1) according to any one of claims 1 to 3, wherein said connecting element (6) has a variable extension to allow adjustment of the position of said first box body (10A) of said first flail mower (10) with respect to said second frame (13).

5. Cutting assembly (1) according to any one of claims 1 to 4, wherein said second frame (13) is rigidly connected to said box body (20A) of said second flail mower (20).

6. Cutting assembly (1) according to any one of claims 1 to 4, wherein said second frame (13) supports said second flail mower (20) in a slidable way to allow said second flail mower (20) to translate along a second displacement direction (202) orthogonal to said second rotation axis (102).

7. Cutting assembly (1) according to claim 6, wherein said second frame (13) is connected to said box body (20A) of said second flail mower (20) by means of second coupling means that configure rectilinear guides (41) defining said second direction of displacement (202).

8. Cutting assembly (1) according to claim 6 or 7, wherein said cutting assembly (1) comprises a further connecting element (66) that determines the position of said second flail mower (20) with respect to said second frame (13).

9. Cutting assembly (1) according to claim 8, wherein said further connecting element (66) is hinged to said box body (20A) of said second flail mower (20) and to a pin (82) defining said second rotation axis (102).

10. Cutting assembly (1) according to claim 8 or 9, wherein said further connecting element (66) has a variable extension to allow adjustment of the distance between said box body (20A) of said second flail mower (20) and said second rotation axis (102).

## Patentansprüche

1. Schneidanordnung (1), welche auf einem Fahrzeug mit Selbstantrieb installierbar ist und einen ersten Schlegelmäher (10) und einen zweiten Schlegelmäher (20) aufweist, wobei jeder Schlegelmäher (10, 20) einen Kastenkörper (10A, 20A) und Pflanzenmaterial-Schneideinrichtungen aufweist, welche innerhalb des Kastenkörpers (10A, 20A) gelagert sind, wobei die Schneidanordnung (1) aufweist:
- eine Basishalterung (11), welche mit dem Fahrzeug mit Selbstantrieb, direkt oder indirekt, verbindbar ist;
- einen ersten Halterungsrahmen (12), welcher mit der Basishalterung (11) derart gelenkig verbunden ist, dass er sich um eine erste Rotationsachse (101) dreht;
- erste Bewegungseinrichtungen (7) zum Drehen des ersten Rahmens (12) um die erste Rotationsachse (101);
- einen zweiten Rahmen (13), welcher mit dem zweiten Schlegelmäher (20) verbunden ist und mit dem ersten Rahmen (12) derart gelenkig verbunden ist, dass er sich um eine zweite Rotationsachse (102) dreht;
- zweite Bewegungseinrichtungen (8) zum Drehen des zweiten Rahmens (13), in Bezug auf den ersten Rahmen, um die zweite Rotationsachse (102);
**dadurch gekennzeichnet, dass**
- der erste Halterungsrahmen (12) den ersten Schlegelmäher (10) so gleitend lagert, dass der erst Schlegelmäher (10) entlang einer ersten Fortbewegungsrichtung (201) orthogonal zu der ersten Rotationsachse (101) eine translatorische Bewegung durchführen kann; und dadurch, dass die Schneidanordnung (1) aufweist:
- ein Verbindungselement (6), welches den zweiten Rahmen (13) mit dem Kastenkörper (10A) des ersten Schlegelmähers (10) so betriebswirksam verbindet, dass eine Rotation des zweiten Rahmens (13) um die zweite Rotationsachse (102) eine entsprechende Translation des ersten Schlegelmähers (10), in Bezug auf den ersten Rahmen (12), entlang der ersten Fortbewegungsrichtung (201) bestimmt.

2. Schneidanordnung (1) nach Anspruch 1, wobei der zweite Rahmen (12) mit dem ersten Rahmen (12) derart gelenkig verbunden ist, dass der zweite Schlegelmäher (20) in einer Versatzposition in Bezug auf den ersten Schlegelmäher (10) angeordnet ist, wobei die Position entlang einer Richtung parallel zu der ersten Rotationsachse (101) angenommen wird.

3. Schneidanordnung (1) nach Anspruch 1 oder 2, wobei der erste Rahmen (12) mit dem Kastenkörper (10A) des ersten Schlegelmähers (10) mittels erster Kopplungseinrichtungen verbunden ist, welche geradlinige Führungen (31) bilden, welche die erste Fortbewegungsrichtung (201) definieren.

4. Schneidanordnung (1) nach einem der Ansprüche 1 bis 3, wobei das Verbindungselement (6) eine variable Erweiterung zum Ermöglichen einer Einstellung der Position des ersten Kastenkörpers (10A) des ersten Schlegelmähers (10) in Bezug auf den zweiten Rahmen (13) aufweist.

5. Schneidanordnung (1) nach einem der Ansprüche 1 bis 4, wobei der zweite Rahmen (13) mit dem Kastenkörper (20A) des zweiten Schlegelmähers (20) starr verbunden ist.

6. Schneidanordnung (1) nach einem der Ansprüche 1 bis 4, wobei der zweite Rahmen (13) den zweiten Schlegelmäher (20) so gleitend lagert, dass der zweite Schlegelmäher (20) entlang einer zweiten Fortbewegungsrichtung (202) orthogonal zu der zweiten Rotationsachse (102) eine translatorische Bewegung durchführen kann.

7. Schneidanordnung (1) nach Anspruch 6, wobei der zweite Rahmen (13) mit dem Kastenkörper (20A) des zweiten Schlegelmähers (20) mittels zweiter Kopplungseinrichtungen verbunden ist, welche geradlinige Führungen (41) bilden, welche die zweite Fortbewegungsrichtung (202) definieren.

8. Schneidanordnung (1) nach Anspruch 6 oder 7, wobei die Schneidanordnung (1) ein weiteres Verbindungselement (66) aufweist, welches die Position des zweiten Schlegelmähers (20) in Bezug auf den zweiten Rahmen (13) bestimmt.

9. Schneidanordnung (1) nach Anspruch 8, wobei das weitere Verbindungselement (66) mit dem Kastenkörper (20A) des zweiten Schlegelmähers (20) und mit einem Stift (82) gelenkig verbunden ist, welcher die zweite Rotationsachse (102) definiert.

10. Schneidanordnung (1) nach Anspruch 8 oder 9, wobei das weitere Verbindungselement (66) eine variable Erweiterung zum Ermöglichen einer Einstellung des Abstands zwischen dem Kastenkörper (20A) des zweiten Schlegelmähers (20) und der zweiten Rotationsachse (102) aufweist.

## Revendications

1. Ensemble de coupe (1) pouvant être installé sur un véhicule automoteur et comprenant une première tondeuse à fléaux (10) et une seconde tondeuse à fléaux (20), dans lequel chaque tondeuse à fléaux (10, 20) comprend un corps de boîtier (10A, 20A) et des moyens de coupe de matière végétale supportés à l'intérieur dudit corps de boîtier (10A, 20A), ledit ensemble de coupe (1) comprenant :
- un support de base (11) pouvant être relié, directement ou indirectement, audit véhicule automoteur ;
- un premier châssis de support (12) articulé sur ledit support de base (11) de manière à tourner autour d'un premier axe de rotation (101) ;
- des premiers moyens de déplacement (7) pour faire tourner ledit premier châssis (12) autour dudit premier axe de rotation (101) ;
- un second châssis (13) relié à ladite seconde tondeuse à fléaux (20) et articulé sur ledit premier châssis (12) de manière à tourner autour d'un second axe de rotation (102) ;
- un second moyen de déplacement (8) pour faire tourner ledit second châssis (13), par rapport audit premier châssis (12), autour dudit second axe de rotation (102) ;
**caractérisé en ce que**
ledit premier châssis de support (12) supporte ladite première tondeuse à fléaux (10) de manière coulissante pour permettre à ladite première tondeuse à fléaux (10) de se déplacer le long d'une première direction de déplacement (201) orthogonale audit premier axe de rotation (101) ; et **en ce que** ledit ensemble de coupe (1) comprend :
- un élément de liaison (6) qui relie de manière fonctionnelle ledit second châssis (13) audit corps de boîtier (10A) de ladite première tondeuse à fléaux (10), de telle sorte qu'une rotation dudit second châssis (13) autour dudit second axe de rotation (102) détermine une translation correspondante de ladite première tondeuse à fléaux (10), par rapport audit premier châssis (12), le long de ladite première direction de déplacement (201).

2. Ensemble de coupe (1) selon la revendication 1, dans lequel ledit second châssis (13) est articulé sur ledit premier châssis (12) de telle sorte que ladite seconde tondeuse à fléaux (20) soit placée dans une position décalée par rapport à ladite première tondeuse à fléaux (10), dans lequel ladite position est considérée le long d'une direction parallèle audit premier axe de rotation (101).

3. Ensemble de coupe (1) selon la revendication 1 ou 2, dans lequel ledit premier châssis (12) est relié au corps de boîtier (10A) de ladite première tondeuse à fléaux (10) au moyen de premiers moyens de couplage qui configurent des guides rectilignes (31) définissant ladite première direction de déplacement (201).

4. Ensemble de coupe (1) selon l'une quelconque des revendications 1 à 3, dans lequel ledit élément de liaison (6) présente une extension variable pour permettre un réglage de la position dudit premier corps de boîtier (10A) de ladite première tondeuse à fléaux (10) par rapport audit second châssis (13).

5. Ensemble de coupe (1) selon l'une quelconque des revendications 1 à 4, dans lequel ledit second châssis (13) est relié rigidement audit corps de boîtier (20A) de ladite seconde tondeuse à fléaux (20).

6. Ensemble de coupe (1) selon l'une quelconque des revendications 1 à 4, dans lequel ledit second châssis (13) supporte ladite seconde tondeuse à fléaux (20) de manière coulissante pour permettre à ladite seconde tondeuse à fléaux (20) de se déplacer le long d'une seconde direction de déplacement (202) orthogonale audit second axe de rotation (102).

7. Ensemble de coupe (1) selon la revendication 6, dans lequel ledit second châssis (13) est relié audit corps de boîtier (20A) de ladite seconde tondeuse à fléaux (20) au moyen de seconds moyens de couplage qui configurent des guides rectilignes (41) définissant ladite seconde direction de déplacement (202).

8. Ensemble de coupe (1) selon la revendication 6 ou 7, dans lequel ledit ensemble de coupe (1) comprend un élément de liaison supplémentaire (66) qui détermine la position de ladite seconde tondeuse à fléaux (20) par rapport audit second châssis (13).

9. Ensemble de coupe (1) selon la revendication 8, dans lequel ledit élément de liaison supplémentaire (66) est articulé sur ledit corps de boîtier (20A) de ladite seconde tondeuse à fléaux (20) et sur une broche (82) définissant ledit second axe de rotation (102).

10. Ensemble de coupe (1) selon la revendication 8 ou 9, dans lequel ledit élément de liaison supplémentaire (66) présente une extension variable pour permettre un réglage de la distance entre ledit corps de boîtier (20A) de ladite seconde tondeuse à fléaux (20) et ledit second axe de rotation (102).
